(19) Europäisches Patentamt
European Patent Office
Office européen des brevets

(11) EP 2 274 379 B1

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(21) Anmeldenummer: **09741920.4**

(22) Anmeldetag: **27.02.2009**

(51) Int Cl.:
***C08L 75/04*** *(2006.01)*

(86) Internationale Anmeldenummer:
**PCT/EP2009/052377**

(87) Internationale Veröffentlichungsnummer:
**WO 2009/135702 (12.11.2009 Gazette 2009/46)**

(54) **KUNSTSTOFFMISCHUNGEN UMFASSEND EIN THERMOPLASTISCHES POLYURETHAN (TPU) UND EIN SCHLAGZÄHES POLY(METH)ACRYLAT**

PLASTIC MIXTURES COMPRISING THERMOPLASTIC POLYURETHANE (TPU) AND IMPACT-RESISTANT POLY(METH)ACRYLATE

MÉLANGES DE MATIÈRES PLASTIQUES COMPRENANT UN POLYURÉTHANE THERMOPLASTIQUE (TPU) ET UN POLY(MÉTH)ACRYLATE RÉSISTANT AU CHOC

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **06.05.2008 DE 102008001596**

(43) Veröffentlichungstag der Anmeldung:
**19.01.2011 Patentblatt 2011/03**

(73) Patentinhaber: **Evonik Röhm GmbH**
**64293 Darmstadt (DE)**

(72) Erfinder:
- **NUMRICH, Uwe**
  **64846 Groß-Zimmern (DE)**
- **BATTENHAUSEN, Peter**
  **63636 Brachttal-Udenhain (DE)**
- **DICKHAUT, Günther**
  **68305 Mannheim (DE)**
- **GUENANTEN, Claude**
  **64291 Darmstadt (DE)**

(56) Entgegenhaltungen:
**EP-A- 0 272 975 GB-A- 2 226 324**

EP 2 274 379 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Kunststoffmischungen, die ein thermoplastisches Polyurethan (TPU) und ein schlagzähes Poly(meth)acrylat umfassen, und Verfahren zur Herstellung dieser Mischungen. Darüber hinaus beschreibt die vorliegende Erfindung Formkörper, die diese Kunststoffmischungen aufweisen.

Poly(meth)acrylate, insbesondere Polymethylmethacrylate, sind Kunststoffe mit einem hervorragenden Eigenschaftsprofil. Nachteilig ist jedoch die geringe Kerbschlagzähigkeit dieser Kunststoffe. Zur Verbesserung dieser Eigenschaft werden Polymethylmethacrylate mit Schlagzähmodifiern versehen, die an sich weithin bekannt sind. Diese schlagzähmodifierten Polymethylmethacrylate sind unter anderem in EP-A 0 113 924, EP-A 0 522 351, EP-A 0 465 049 und EP-A 0 683 028 dargelegt. Viele dieser Zusammensetzungen zeigen jedoch eine starke Neigung zur Bildung von so genanntem Weißbruch. Weißbruch stellt eine Trübung des Kunststoffes dar, die bei Biegebeanspruchung oder bei Schlageinwirkung auftritt. Eine schlagzähe Kunststoffformmasse auf Basis von Methyl(meth)acrylat mit einer geringen Weißbruchbildung wird in DE-A-38 42 796 dargelegt.

Darüber hinaus sind Kunststoffmischungen bekannt, die Poly(meth)acrylate und Polyurethane umfassenden. Durch diese Mischung wird ebenfalls ein Kunststoff mit verbesserter Kerbschlagzähigkeit erhalten. Interpenetrierende Netzwerke, die auf Mischungen von Poly(meth)acrylaten und Polyurethanen basieren, sind unter anderem in US 3,700,752; US 5,539,053 und EP-A-0 272 975 beschrieben. Nachteilig ist, dass diese Kunststoffe vielfach nicht thermoplastisch verarbeitet werden können.

Des Weiteren sind aus der Druckschrift WO 2007/057242 transparente Kunststoffmischungen bekannt, die thermoplastisches Polyurethan und Polymethylmethacrylat umfassen. Diese Kunststoffe zeigen bereits ein gutes Eigenschaftsprofil. Allerdings besteht das dauerhafte Bedürfnis die Eigenschaften dieses Kunststoffes weiter zu verbessern. So zeigen diese Kunststoffe eine Rissfortbildung, die vielen Anforderungen nicht entspricht. Darüber hinaus neigen die in WO 2007/057242 dargelegten Mischungen zur Bildung von Weißbruch.

In Anbetracht des Standes der Technik war es nun Aufgabe der vorliegenden Erfindung einen Kunststoff bereitzustellen, der ein verbessertes Eigenschaftsprofil aufweist. Ein Formkörper, der diesen Kunststoff umfasst, sollte insbesondere eine besonders geringe Rissfortbildung zeigen. Weiterhin sollte dieser Kunststoff zur Herstellung von Formkörpern dienen können, die eine geringe Neigung zur Bildung von Weißbruch aufweisen. Des Weiteren sollte der Kunststoff zu Formkörpern mit hervorragenden mechanischen Eigenschaften, beispielsweise mit einem hohen Zugmodul und einer hohen Bruchdehnung verarbeitet werden können.

Eine weitere Aufgabe der Erfindung bestand darin, einen Kunststoff zu schaffen, der zur Herstellung von Formkörpern mit einer hohen Kerbschlagzähigkeit eingesetzt werden kann. Hierbei sollte dieser Eigenschaft auch bei tiefen Temperaturen erhalten bleiben.

Der Kunststoff sollte insbesondere thermoplastisch verarbeitet werden können und eine hohe Bewitterungsstabilität, insbesondere eine hohe UV-Beständigkeit zeigen. Darüber hinaus kann eine weitere Aufgabe der vorliegenden Erfindung darin gesehen werden, einen Kunststoff bzw. einen hieraus erhältlichen Formkörper mit einem hohen Glanz und einer hohen Transparenz zur Verfügung zu stellen. Weiterhin sollte ein Formkörper, der diesen Kunststoff aufweist, mit üblichen Verfahren bedruckt werden können.

Hierbei sollte der Kunststoff möglichst kostengünstig erhalten werden können.

Gelöst werden diese sowie weitere nicht explizit genannte Aufgaben, die jedoch aus den hierin einleitend diskutierten Zusammenhängen ohne Weiteres ableitbar oder erschließbar sind, durch eine Kunststoffmischung mit allen Merkmalen des Patentanspruchs 1. Zweckmäßige Abwandlungen der erfindungsgemäßen Kunststoffmischungen werden in den auf Anspruch 1 rückbezogenen abhängigen Ansprüchen unter Schutz gestellt. Hinsichtlich des Verfahrens zur Herstellung dieser Kunststoffe und eines Formkörpers stellen die Gegenstände der Ansprüche 19 bzw. 20 eine Lösung der zugrunde liegenden Aufgabe bereit.

Gegenstand der vorliegenden Erfindung ist dementsprechend eine Kunststoffmischung umfassend mindestens ein thermoplastisches Polyurethan A) und mindestens ein schlagzähmodifiziertes Poly(meth)acrylat B), welche dadurch gekennzeichnet ist, dass das schlagzähmodifizierte Poly(meth)acrylat B) eine Hartphase mit einer Glasübergangstemperatur von mindestens 70°C und eine Zähphase mit einer Glasübergangstemperatur von höchstens -10°C umfasst, die Zähphase eine mittlere Teilchengröße von höchstens 130 nm aufweist und mindestens ein Teil der Zähphase mit der Hartphase kovalent verknüpft ist.

Hierdurch gelingt es auf nicht vorhersehbare Weise einen Kunststoffstoff mit einem verbesserten Eigenschaftsprofil bereitzustellen. Die Kunststoffmischung der vorliegenden Erfindung kann insbesondere zu Formkörpern verarbeitet werden, die eine besonders geringe Rissfortbildung und eine geringe Neigung zur Bildung von Weißbruch zeigen. Des Weiteren weisen Formkörper, die eine erfindungsgemäße Kunststoffmischung umfassen, hervorragende mechanische Eigenschaften, beispielsweise ein hohes Zugmodul, eine hohe Bruchdehnung und eine hohe Kerbschlagzähigkeit, auf. Überraschend bleiben diese Eigenschaften auch tiefen Temperaturen erhalten.

Die Kunststoffmischung der vorliegenden Erfindung kann thermoplastisch verarbeitet werden und zeigt eine hohe Bewitterungsstabilität, insbesondere eine hohe UV-Beständigkeit. Gemäß einer bevorzugten Ausführungsform

kann eine erfindungsgemäße Kunststoffmischung zu Folien oder anderen Formkörpern verarbeitet werden, die einem hohen Glanz und eine hohe Transparenz haben. Weiterhin kann ein Formkörper mit einer Kunststoffmischung der vorliegenden Erfindung mit üblichen Verfahren bedruckt werden.

Die erfindungsgemäße Kunststoffmischung kann wirtschaftlich hergestellt werden, wobei keine unakzeptablen Gefahren für die Umwelt oder die Gesundheit mit der Herstellung oder Verarbeitung der Kunststoffmischung einhergehen.

Eine erfindungsgemäße Kunststoffmischung umfasst mindestens ein thermoplastisches Polyurethan A). Polyurethane (PUR) sind Polymere, in deren Makromolekülen die Wiederholungseinheiten durch Urethan-Gruppierungen -NH-CO-O - verknüpft sind. Polyurethane werden im Allgemeinen erhalten durch Polyaddition aus zwei- oder höherwertigen Alkoholen und Isocyanaten gemäß

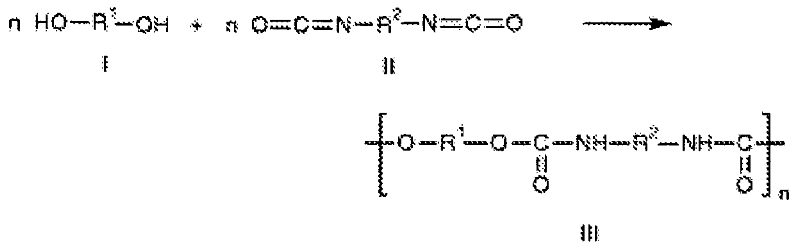

I II III

$R^1$ und $R^2$ können dabei für niedermolekulare oder selbst schon polymere aliphatische oder aromatische Gruppen stehen. Technisch. wichtige PUR werden hergestellt aus Polyester- und/oder Polyetherdiolen und z.B. 2,4- bzw. 2,6-Toluoldiisocyanat (TDI, $R^2 = C_6H_3 -CH_3$), 4,4'-Methylendi(phenylisocyanat) (MDI, $R^2 = C_6H_4 -CH_2 -C_6H_4$), 4,4 '-Methylendicyclohexylisocyanat (HMDI, $R^2 = C_6H_{10} -CH_2 -C_6H_{10}$) oder Hexamethylendiisocyanat [HDI, $R^2 = (CH_2)_6$]. Im Allgemeinen kann die Synthese der PUR ohne die Verwendung von Lösungsmittel oder in inerten organischen Lösungsmitteln erfolgen. Als Katalysatoren für die Polyaddition werden vielfach bestimmte Amine oder organische Zinn-Verbindungen. eingesetzt. Der Einsatz von bisfunktionellen Alkoholen und Isocyanaten in äquimolaren Verhältnissen führt zu linearen PUR. Verzweigte und vernetzte Produkte fallen bei Mitverwendung von höherfunktionellen Edukten oder auch bei Isocyanat-Überschuß an, bei dem Isocyanat-Gruppen mit Urethan- bzw. Harnstoff-Gruppen unter Ausbildung von Allophanat- bzw. Biuret-Strukturen reagieren, z.B.:

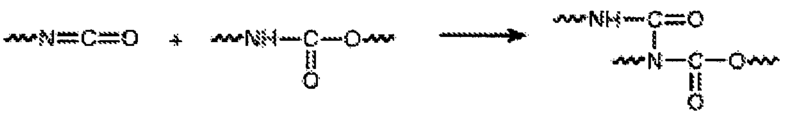

Allophanat-Struktur

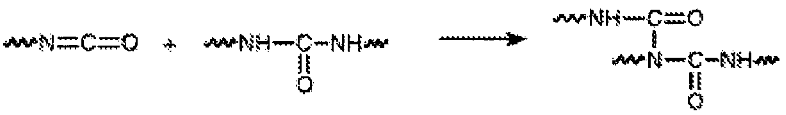

Biuret-Struktur

Entsprechend fallen je nach Wahl und stöchiometrischen Verhältnis der Ausgangsstoffe PUR mit sehr unterschiedlichen mechanischen Eigenschaften an, die unter anderem als Bestandteile von Klebstoffen und Lacken (P.-Harze), als Ionomere, als thermoplastische Material für Lagerteile, Rollen, Reifen, Walzen verwendet werden und als mehr oder weniger harte Elastomere in Faserform (Elastofasern, Kurzzeichen PUE für diese Elastan- oder Spandex-Fasern) oder als Polyether- bzw. Polyesterurethan-Kautschuk (Kurzzeichen EU bzw. AU nach DIN IS.O. 1629: 1981-10) vielfältige Einsatzmöglichkeiten finden; siehe auch Polyurethan-Kautschuke, Polyurethan-Lacke, Polyurethan-Harze. Weiterhin werden PUR unter anderem in Kunststoffe 85, 1616 (1995), Batzer 3, 158-170 Batzer 3, 158-170; Domininghaus (5.), S. 1140 ff.; Encycl. Polym. Sci. Eng. 13, 243-303; Houben-Weyl E 20/2, 1561-1721 beschrieben.

Der Begriff "thermoplastisch" ist in der Fachwelt weithin bekannt, wobei hierunter Kunststoffe zu verstehen sind, die unter anderem durch Extrusionsverfahren und/oder Spritzgussverfahren verarbeitet werden können.

Vorzugsweise wird als thermoplastisches Polyurethan A) ein Produkt mit einem hohen Anteil an aliphatischen Verbindungseinheiten verwendet. Vorzugsweise umfassen derartige Polyurethane A) höchstens 10 Gew.-%, besonders bevorzugt höchstens 5 Gew.-% an Wiederholungseinheiten, die aromatische Gruppen aufweisen.

Erfindungsgemäß umfasst eine Kunststoffmischung mindestens ein schlagzähmodifiziertes Poly(meth)acrylat B). Unter dem Begriff Poly(meth)acrylat wird im Rahmen der vorliegenden Erfindung ein Polymer verstanden, dass durch radikalische Polymerisation von (Meth)acrylaten erhältlich ist. Bevorzugte schlagzähmodifizierte Poly(meth)acrylate B) umfassen mindestens 40 Gew.-%, besonders bevorzugt mindestens 60 Gew.-% und ganz besonders bevorzugt mindestens 80 Gew.-% an Wiederholungseinheiten, die von (Meth)acrylaten abgeleitet sind. Die Poly(meth)acrylate können bevorzugt durch radikalische Polymerisation erhalten werden. Dementsprechend ergibt sich der Gewichtsanteil an Wiederholungseinheiten aus den zur Herstellung der Polymere eingesetzten Gewichtsanteilen an entsprechenden Monomeren.

Der Ausdruck (Meth)acrylate umfasst Methacrylate und Acrylate sowie Mischungen aus beiden. Diese Monomere sind weithin bekannt. Zu diesen gehören unter anderem (Meth)acrylate, die sich von gesättigten Alkoholen ableiten, wie beispielsweise Methyl(meth)acrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycol-di(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige (Meth)acrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat.

Neben den (Meth)acrylaten kann ein erfindungsgemäß einsetzbares (Poly)methacrylat B) Wiederholungseinheiten aufweisen, die von Comonomeren abgeleitet sind.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Acrylnitril; Vinylester, wie Vinylacetat; Styrol, substituierte Styrole mit einem Alkylsubstituenten in der Seitenkette, wie z. B. $\alpha$-Methylstyrol und $\alpha$-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.

Im Allgemeinen werden diese Comonomere zur Herstellung der Poly(meth)acrylate B) in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.

Das erfindungsgemäß einsetzbare Poly(meth)acrylat B) weist eine Hartphase mit einer Glasübergangstemperatur von mindestens 70°C und eine Zähphase mit einer Glasübergangstemperatur von höchstens -10°C auf, wobei die Zähphase eine mittlere Teilchengröße von höchstens 130 nm aufweist und mindestens ein Teil der Zähphase mit der Hartphase kovalent verknüpft ist. Dementsprechend liegt die Zähphase teilchenförmig in der Kunststoffmischung vor, wobei die kontinuierliche Phase, die diese Teilchen umgibt, unter anderem die Hartphase, weiteres Poly(meth)acrylat und/oder thermoplastisches Polyurethan umfassen kann. Der Durchmesser der Teilchen ist hierbei kleiner oder gleich 130nm, wobei bevorzugte Kunststoffmischungen eine Zähphase mit einer Teilchengröße kleiner oder gleich 70 nm aufweisen, wobei sich die Teilchengröße auf den Durchmesser des Gewichtsmittels bezieht. Die Einheitlichkeit, der in Kunststoffmischung enthaltenen Zähphase, beträgt vorzugsweise 0,5 oder weniger. Besonders bevorzugt ist die Einheitlichkeit kleiner oder gleich 0,2. Eine hohe Einheitlichkeit der Zähphasen-Teilchen führt unter anderem zu besonders transparenten Kunststoffen.

Die Zähphase des erfindungsgemäß einzusetzenden schlagzähmodifizierten Poly(meth)acrylats B) weist eine Glasübergangstemperatur von höchstens - 10°C auf. Bevorzugt ist die Glasübergangstemperatur der Zähphase kleiner oder gleich -20°C.

Die Glasübergangstemperatur kann über die Art und den Anteil der zur Herstellung der Zähphase verwendeten Monomere beeinflusst werden. Dabei kann die Glasübergangstemperatur Tg des Polymerisates in bekannter Weise mittels Differential Scanning Calorimetry (DSC) ermittelt werden. Weiterhin kann die Glasübergangstemperatur Tg auch mittels der Fox-Gleichung näherungsweise voraus berechnet werden. Nach Fox T. G., Bull. Am. Physics Soc. 1, 3, Seite 123 (1956) gilt:

$$\frac{1}{Tg} = \frac{x_1}{Tg_1} + \frac{x_2}{Tg_2} + \ldots + \frac{x_n}{Tg_n}$$

wobei $x_n$ für den Massebruch (Gew.-%/100) des Monomeren n steht und $Tg_n$ die Glasübergangstemperatur in Kelvin des Homopolymeren des Monomeren n bezeichnet. Weitere hilfreiche Hinweise kann der Fachmann dem Polymer Handbook 2nd Edition, J. Wiley & Sons, New York (1975) entnehmen, welche Tg-Werte für die geläufigsten Homopolymerisate angibt.

Zweckmäßig kann die Zähphase des schlagzähmodifizierten Poly(meth)acrylats B) mindestens 50 Gew.-%, bevorzugt mindestens 60 Gew.-% an Wiederholungseinheiten aufweisen, die von einem Alkylacrylat mit 1 bis 6 Kohlenstoffatomen, bezogen auf das Gewicht der Zähphase des schlagzähmodifizierten Poly(meth)acrylats B), abgeleitet sind. Zu diesen bevorzugt einzusetzenden Monomeren gehören insbesondere Methylacrylat, Ethylacrylat, Propylacrylat, n-Butylacrylat, tert.-Butylacrylat, Pentylacrylat und Hexylacrylat, wobei Butylacrylat besonders bevorzugt ist.

Erfindungsgemäß ist mindestens ein Teil der Zähphase mit der Hartphase kovalent verknüpft. Zweckmäßig sind mindestens 5 Gew.-%, vorzugsweise mindestens 15 Gew.-% und besonders bevorzugt mindestens 20 Gew.-% der Hartphase kovalent mit der Zähphase verknüpft. Eine kovalente Verknüpfung der Zähphase mit der Hartphase kann insbesondere durch die Verwendung von vernetzenden Monomeren bei der Herstellung der Zähphase der schlagzähmodifizierten Poly(meth)acrylate B) erzielt werden. Vernetzende Monomere sind Verbindungen, die zwei, drei oder mehr radikalisch polymerisierbare Gruppen aufweisen.

Zu diesen gehören insbesondere (Meth)acrylate mit zwei Doppelbindungen, wie beispielsweise (Meth)acrylate, die sich von ungesättigten Alkoholen ableiten, wie z. B. 2-Propinyl(meth)acrylat, Allyl(meth)acrylat, Vinyl(meth)acrylat, sowie (Meth)acrylate, die sich von Diolen oder höherwertigen Alkoholen ableiten, wie z.B. Glycoldi(meth)acrylate, wie Ethylenglycoldi(meth)acrylat, Diethylenglycoldi(meth)acrylat, Triethylenglycoldi(meth)acrylat, Tetra- und Polyethylenglycoldi(meth)acrylat, 1,3- Butandiol(meth)acrylat, 1,4-Butandiol(meth)acrylat, 1,6-Hexandioldi(meth)acrylat, Glycerindi (meth)acrylat und Diurethandimethacrylat; (Meth)acrylate mit drei oder mehr Doppelbindungen, wie z.B. Glycerintri (meth)acrylat, Trimethylolpropantri(meth)acrylat, Pentaerythrittetra(meth)acrylat und Dipentaerythritpenta(meth)acrylat.

Vielfach wird zwischen so genannten Kreuzvernetzern und Pfropfvernetzern unterschieden. Zur Gruppe der Kreuzvernetzer gehören Monomere, die wenigstens zwei Acryl- oder Methacrylreste enthalten. Als Pfropfvernetzer werden Monomere bezeichnet, die neben einem Acryl- oder Methacrylrest noch eine ethylenisch ungesättigte Gruppe von deutlich geringerer Polymerisationsneigung, in der Regel eine Allylgruppe, enthalten.

Bevorzugt umfasst die Zähphase mindestens 0,5 Gew.-%, bevorzugt mindestens 1 Gew.-%, bezogen auf das Gewicht der Zähphase, Wiederholungseinheiten, die von vernetzenden Monomeren abgeleitet sind. Hierbei sind Pfropfvernetzer oder Monomere, die drei oder mehr Acryl- oder Methacrylgruppen im Molekül enthalten, bevorzugt. Der Anteil an Wiederholungseinheiten, die von Pfropfvernetzern oder von Monomeren, die drei oder mehr Acryl- oder Methacrylgruppen im Molekül enthalten, abgeleitet sind, liegt besonders bevorzugt im Bereich von 1 bis 4 Gew.-%, bezogen auf das Gewicht der Zähphase. Monomere, die zwei (Meth)acrylgruppen im Molekül enthalten, können mit Vorteil mit einem Anteil von 0,05 bis 2 Gew.-% in Form von Wiederholungseinheiten in der Zähphase enthalten sein.

Da die Wiederholungseinheiten, über die die Zähphase mit der Hartphase kovalent verknüpf wird, von Monomeren abgeleitet sind, die während der Herstellung der Zähphase eingesetzt werden, wird das Gewicht dieser Wiederholungseinheiten der Zähphase zugerechnet.

Neben den zuvor dargelegten Wiederholungseinheiten, die von Alkylacrylat mit 1 bis 6 Kohlenstoffatomen bzw. von vernetzenden Monomeren abgeleitet sind, können bevorzugte Zähphasen auch Wiederholungseinheiten umfassen, die von weiteren Monomeren abgeleitet sind. Zu diesen Monomeren zählen insbesondere die zuvor dargelegten (Meth) acrylate, die sich von den Alkylacrylaten mit 1 bis 6 Kohlenstoffatomen bzw. von den vernetzenden Monomeren unterscheiden.

Neben der Zähphase umfasst das schlagzähmodifizierte Poly(meth)acrylat B) mindestens eine mit der Zähphase kovalent verbundene Hartphase. Die Hartphase weist eine Glasübergangstemperatur von mindestens 70°C, bevorzugt mindestens 80 °C auf. Wie bereits dargelegt, kann die Glasübergangstemperatur durch die Wahl der Monomere zur Herstellung der Hartphase eingestellt werden.

Bevorzugt umfasst die Hartphase des schlagzähmodifizierten Poly(meth)acrylats B) mindestens 80 -Gew.-%, besonders bevorzugt mindestens 90 Gew.-% Wiederholungseinheiten, die von Methylmethacrylat abgeleitet sind, bezogen auf das Gewicht der Hartphase des schlagzähmodifizierten Poly(meth)acrylats B). Die Hartphase von bevorzugten schlagzähmodifizierten Poly(meth)acrylaten B) kann neben Methylmethacrylat bis zu 20 Gew.-% Comonomere umfassen.

Gemäß einer zweckmäßigen Abwandlung der erfindungsgemäßen Kunststoffmischung kann das Gewichtsverhältnis von an die Zähphase kovalent gebundene Hartphase zu Zähphase des schlagzähmodifizierten Poly(meth) acrylats B) mindestens 1:10, besonders bevorzugt mindestens 1:5 und ganz besonders bevorzugt mindestens 1:1

betragen.

Zweckmäßig weist das schlagzähmodifizierte Poly(meth)acrylat B) höchstens 0,1 Gew.-%, besonders bevorzugt höchstens 0,05 Gew.-% an wasserlöslichen Bestandteilen auf, bezogen auf das Gewicht des schlagzähmodifizierten Poly(meth)acrylats B). Ein geringer Anteil an wasserlöslichen Bestandteilen kann insbesondere durch das Aufarbeitungsverfahren bei der Herstellung des schlagzähmodifizierten Poly(meth)acrylats B) erzielt werden. Durch diese Maßnahme kann insbesondere die Empfindlichkeit gegen Trübung unter Feuchtigkeitseinwirkung verringert werden.

Bevorzugt einzusetzende schlagzähmodifizierte Poly(meth)acrylate B) weisen einen geringen Anteil an aromatischen Gruppen, insbesondere an Styrol auf. Hierdurch kann überraschend die Witterungsstabilität verbessert werden. Zweckmäßig sind insbesondere schlagzähmodifizierte Poly(meth)acrylate B), die höchstens 10 Gew.-%, besonders bevorzugt höchstens 2 Gew.-% und ganz besonders bevorzugt höchstens 0,5 Gew.-% an Wiederholungseinheiten aufweisen, die von Monomeren mit aromatischen Gruppen, insbesondere von Styrolmonomeren abgeleitet sind.

Das erfindungsgemäß einzusetzende schlagzähmodifizierte Poly(meth)acrylat B) kann unter anderem durch bekannte Emulsionspolymerisationsverfahren erhalten, werden, die unter anderem in Ullmann's Encyclopedia of Industrial Chemistry, Fifth Edition dargelegt sind. Im Allgemeinen wird hierfür eine wässrige Phase hergestellt, die neben Wasser übliche Additive, insbesondere Emulgatoren und Schutzkolloide zur Stabilisierung der Emulsion umfassen kann.

Das zwei- oder mehrphasige Emulsionspolymerisat wird in herkömmlicher Weise durch zwei- oder mehrstufige Emulsionspolymerisation in wässriger Phase erzeugt. In der ersten Stufe wird die Zähphase erzeugt. Obwohl bekannte Methoden unter Einsatz eines Saatlatex oder unter allmählichem Monomerzusatz grundsätzlich anwendbar sind, lassen sich die erfindungsgemäß angestrebten Eigenschaften am besten durch ein Verfahren erreichen, bei dem die Monomermischung für die Zähphase insgesamt emulgiert und polymerisiert wird.

Die Teilchengröße der Zähphase hängt unter anderem von der Konzentration des Emulgators ab. Teilchen mit einer mittleren Teilchengröße (Gewichtsmittelwert) unter 130, vorzugsweise unter 70 nm, und mit einer Uneinheitlichkeit der Teilchengröße unter 0,5, vorzugsweise unter 0,2, werden bei Emulgatorkonzentrationen von 0,15 bis 1,0 Gew.-%, bezogen auf die Wasserphase, erreicht. Bei geringeren Emulgatormengen ergibt sich eine größere mittlere Teilchengröße, bei größeren Emulgatormengen eine höhere Uneinheitlichkeit. Die Uneinheitlichkeit ist umso niedriger - also die Einheitlichkeit der Teilchengröße umso größer -je kürzer die Phase der Teilchenbildung zu Beginn der Emulsionspolymerisation andauert.

Vor allem sollte eine erneute Teilchenbildung nach Beginn der Polymerisation vermieden werden, was bei nachträglicher Emulgatorzugabe der Fall sein kann. Auch die Polymerisationsgeschwindigkeit kann die Teilchengröße und die Uneinheitlichkeit der Teilchengröße beeinflussen; ist der Radikalstrom zu niedrig, so ist die Uneinheitlichkeit zu hoch, ist er zu hoch, so kann - vor allem bei der Polymerisationsauslösung mit Peroxodisulfaten - eine zu hohe Feuchtigkeitsempfindlichkeit resultieren.

Die genannte Emulgatorkonzentration gilt vor allem für übliche anionische Emulgatoren. Dazu zählen z. B. alkoxylierte und sulfierte Paraffine, die besonders bevorzugt sind.

Als Polymerisationsinitiator werden z. B. 0,01 bis 0,5 Gew.-% an Alkali- oder Ammoniumperoxodisulfat, bezogen auf die Wasserphase, eingesetzt und die Polymerisation wird bei Temperaturen von 20 bis 100 °C ausgelöst. Bevorzugt arbeitet man mit Redoxsystemen, beispielsweise aus 0,01 bis 0,05 Gew.-% organischen Hydroperoxiden und 0,05 bis 0,15 Gew.-% Rongalit bei Temperaturen von 20 bis 80 °C.

Die Wahl der richtigen Polymerisationsbedingungen kann durch die Messung der mittleren Teilchengröße und der Uneinheitlichkeit der Teilchengröße bei einem Versuchsansatz überprüft und erforderlichenfalls nach den oben erwähnten Regeln verändert werden. Beide Messgrößen lassen sich aus dem Ergebnis der Streulichtmessung bei der Ultrazentrifugation des fertigen Latex nach bekannten Methoden errechnen.

Das Dispergieren der monomerhaltigen Phase in der wässrigen Phase kann mit bekannten Mitteln erfolgen. Hierzu gehören insbesondere mechanische Verfahren sowie die Anwendung von Ultraschall:

> Das Emulsionspolymerisat fällt in Form einer wässrigen Dispersion mit einem Feststoffgehalt von 30 bis 60 Gew.-% an, die, bezogen auf Feststoff, in der Regel mehr als 0,05 Gew.-% an wasserlöslichen Bestandteilen enthält. Die wasserlöslichen Bestandteile können von dem Emulsionspolymerisat abgetrennt werden, falls dies erwünscht ist, indem die Dispersion koaguliert, die flüssige Wasserphase von dem Koagulat abgetrennt und das Koagulat zu einer Formmasse verschmolzen wird.

Für diese Arbeitsgänge wird zweckmäßig ein Extruder, insbesondere ein Doppelschnecken-Entgasungsextruder benutzt. Die Dispersion wird gemäß dieser Aufarbeitungsmethode flüssig in den Extruder eingepumpt und bei einer Temperatur oberhalb der Glasübergangstemperatur des Emulsionspolymerisats durch die gemeinsame Einwirkung von Hitze und Scherkräften koaguliert. Die Wasserphase bleibt infolge des im Extruder herrschenden Druckes auch oberhalb 100 °C flüssig und wird unter Druck durch einen Schlitz oder eine Siebplatte in der Extruderwandung mitsamt der gelösten Bestandteile abgetrennt. Geeignete Verfahren und Vorrichtungen sind z. B. aus der DE-A 27 50 682 und der US-A 41 10 843 bekannt. Ein eventueller Restgehalt an Wasser kann in bekannter Weise in einer Entgasungszone des Extruders

verdampft werden.

Die geschmolzene Formmasse wird aus dem Extruder ausgetragen und granuliert oder zu einem Strang mit einem beliebigen gewünschten Profil geformt und unter die Erweichungstemperatur (Glasübergangstemperatur) gekühlt.

Die Herstellung von besonders bevorzugtem schlagzähmodifizierten Poly(meth)acrylat B) ist in DE-A- 38 42 796 dargestellt.

Zur Herstellung einer erfindungemäßen Kunststoffmischung kann ein thermoplastisches Polyurethan A) mit einem schlagzähmodifizierten Poly(meth)acrylate B) auf bekannte Weise compoundiert werden. Dies kann beispielsweise in einem Extruder erfolgen.

Bevorzugte Kunststoffmischungen der vorliegenden Erfindung weisen 10 bis 60 Gew.-%, besonders bevorzugt 15 bis 40 Gew.-% Polyurethan A) und 10 bis 60, bevorzugt 15 bis 30 Gew.-% schlagzähmodifiziertes Poly(meth)acrylat B) auf. Das Gewichtsverhältnis von Polyurethan A) zu schlagzähmodifiziertem Poly(meth)acrylat B) kann vorzugsweise im Bereich von 10:1 bis 1:10, besonders bevorzugt 3:1 bis 1:3 liegen.

Neben einem thermoplastischen Polyurethan A) und einem schlagzähmodifizierten Poly(meth)acrylat B) kann eine Kunststoffmischung der vorliegenden Erfindung weitere Polymere aufweisen. Hierzu gehören insbesondere Poly (meth)acrylate, Polystyrole, Polymere, die Acrylnitril oder Maleinsäureanhydrid umfassen, Polyacrylnitrile, Polyether, Polyester, Polycarbonate sowie Polyvinylchloride, wobei Poly(meth)acrylate besonders bevorzugt eingesetzt werden.

Das Gewichtsmittel des Molekulargewichts $M_w$ der Homo- und/oder Copolymere, die neben dem thermoplastischen Polyurethan und dem schlagzähmodifizierten Poly(meth)acrylat B) in der Kunststoffmischung optional enthalten sein können, kann in weiten Bereichen schwanken, wobei das Molekulargewicht üblicherweise auf den Anwendungszweck und die Verarbeitungsweise der Formmasse abgestimmt wird. Im Allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne dass hierdurch eine Einschränkung erfolgen soll.

Wie bereits dargelegt, wird im Rahmen der vorliegenden Erfindung unter einem Poly(meth)acrylat ein Polymer verstanden, dass durch radikalische Polymerisation von (Meth)acrylaten erhältlich ist. Ein optional einsetzbares Poly (meth)acrylat C) unterscheidet sich vom schlagzähmodifizierten Poly(meth)acrylat B). Bevorzugte Poly(meth)acrylate C) umfassen mindestens 40 Gew.-%, besonders bevorzugt mindestens 60 Gew.-% und ganz besonders bevorzugt mindestens 80 Gew.-% an Wiederholungseinheiten, die von (Meth)acrylaten abgeleitet sind. Neben den (Meth)acrylaten kann ein (Poly)methacrylat C) Wiederholungseinheiten aufweisen, die von Comonomeren abgeleitet sind. Im Allgemeinen werden diese Comonomere zur Herstellung der Poly(meth)acrylate C) in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.

Ganz besonders bevorzugt wird Polymethylmethacrylat (PMMA) eingesetzt. Diese Polymere enthalten einen hohen Anteil an Wiederholungseinheiten, die von Methylmethacrylat abgeleitet sind. Im Allgemeinen enthalten Mischungen zur Herstellung von Polymethylmethacrylat mindestens 50 Gew.-%, vorzugsweise mindestens 80 Gew.-% und besonders bevorzugt mindestens 95 Gew.-%, bezogen auf das Gewicht der Monomere, Methylmethacrylat.

Das Gewichtsmittel des Molekulargewichts $M_w$ bevorzugter (Poly)methacrylate C), insbesondere bevorzugter Polymethylmethacrylate, liegt im Bereich zwischen 20 000 und 1 000 000 g/mol, vorzugsweise 50 000 bis 500 000 g/mol und besonders bevorzugt 80 000 bis 300 000 g/mol.

Gemäß einem besonderen Aspekt der vorliegenden Erfindung kann Gewichtsverhältnis von schlagzähmodifizierten Poly(meth)acrylat B) zu Poly(meth)acrylat C) im Bereich von 10:1 bis 1:10 liegen.

Zweckmäßig kann das Gewichtsverhältnis von Polyurethan A) zu Poly(meth)acrylat C) im Bereich von 10:1 bis 1:10 liegen.

Die Kunststoffmischungen der vorliegenden Erfindung können übliche Additive und Zusatzstoffe umfassen. Dazu zählen Farbstoffe, Pigmente, Füllstoffe, Verstärkungsfasern, Gleitmittel, Mattierungsmittel, UV-Schutzmittel usw. Polymerisierbare UV-Absorber können ebenfalls eingesetzt werden, um die Eigenschaften der Kunststoffmischungen zu verändern. Diese können beispielsweise zusammen mit den anderen Monomeren bei der Polymerisation der Hartphasen-Monomeren in das Emulsionspolymerisat einpolymerisiert werden. Darüber hinaus können diese Verbindungen auch bei der Herstellung des Poly(meth)acrylats C) eingesetzt werden.

Überraschende Vorteile weisen insbesondere Kunststoffmischungen auf, die mindestens einen UV-Absorber umfassen.

Weiterhin können die Kunststoffmischungen Mattierungsmittel umfassen. Zu den bevorzugten Mattierungsmittel zählen insbesondere Kunststoffpartikel. Besonders bevorzugte Kunststoffmischungen bestehen aus 10 bis 40 Gew.-%, besonders bevorzugt 15 bis 30 Gew.-% Polyurethan A), 10 bis 40 Gew.-%, besonders bevorzugt 15 bis 30 Gew.-% schlagzähmodifiziertem Poly(meth)acrylat B), 40 bis 80 Gew.-%, besonders bevorzugt 50 bis 70 Gew.-% Poly(meth) acrylat C) und 0 bis 30 Gew.-% Additiven.

Die Kunststoffmischungen der vorliegenden Erfindung können zu Formkörpern, beispielsweise Folien mit hoher Transparenz verarbeitet werden. Vorzugsweise können die Kunststoffmischungen bzw. die hieraus erhältlichen Formkörper eine Transmission von mindestens 50 %, bevorzugt mindestens 60% und ganz besonders bevorzugt mindestens

70 % aufweisen. Die Messung der Transmission kann bei D65 und 10° an einem Probeköper mit einer Schichtdicke von 3 mm erfolgen (Prüfnorm: DIN 5033/5036).

Darüber hinaus zeigen die Kunststoffmischungen eine besonders geringe Neigung zur Rissbildung und eine hohe Stabilität gegenüber Rissfortbildung.

Die vorliegenden Kunststoffmischungen können zur Herstellung von Formkörpern mit hervorragenden Eigenschaften eingesetzt werden. Bevorzugte Formkörper sind insbesondere Folien. Derartige Folien zeichnen sich durch dauerhafte Klarheit, Unempfindlichkeit gegen Wärme und Kälte, Witterungsbeständigkeit, geringe Vergilbung und Versprödung und durch geringen Weißbruch beim Knicken oder Falten aus und eignen sich deshalb beispielsweise als Fenster in Planen, Autoverdecken oder Segeln. Weiterhin können diese Folien zur Abdeckung von Tastaturen, insbesondere von Notebooks oder Computertastaturen eingesetzt werden, um diese gegen Umwelteinflüsse, beispielsweise Nässe zu schützen. Solche Folien haben vielfach eine Dicke unter 1 mm, beispielsweise 0,05 bis 0,5 mm.

Darüber hinaus lassen sich auch Formkörper mit den erfindungsgemäßen Kunststoffmischungen beschichten. Ein wichtiger Anwendungsbereich liegt in der Bildung von dünnen Oberflächenschichten von z. B. 0,05 bis 0,5 mm Dicke auf steifen, formbeständigen Grundkörpern, wie Blechen, Pappen, Spanplatten, Kunststoffplatten u. dergl. In diesem Fall kann der Anteil der Zähphase wesentlich niedriger und die Formmasse infolgedessen härter sein. Für die Herstellung derartiger Überzüge stehen verschiedene Verfahren zur Verfügung. So kann die Formmasse zu einer Folie extrudiert, geglättet und auf das Substrat aufkaschiert werden. Durch die Technik der Extrusionsbeschichtung kann ein extrudierter Strang auf die Oberfläche des Substrats aufgebracht und mittels einer Walze geglättet werden. Wenn als Substrat selbst ein thermoplastischer Kunststoff dient, besteht die Möglichkeit der Coextrusion beider Massen unter Bildung einer Oberflächenschicht aus der klaren Formmasse der Erfindung.

Weiterhin kann der Kunststoff in 3D-Verformungsverfahren (Membranformpressen; Insert Moulding) eingesetzt werden. Hierbei können auch komplexe geometrische Formen bei sehr geringen Temperaturen gebildet werden, ohne dass die Eigenschaften des Kunststoffs unangemessen beeinträchtigt werden.

Ein besonderes Anwendungsgebiet stellen insbesondere Formkörper dar, die im Wintersport eingesetzt werden. So können insbesondere Skier oder Snowboards mit den Kunststoffen der vorliegenden Erfindung beschichtet werden, wobei hierzu auch Folien eingesetzt werden können. Weiterhin können Schilder aller Art, insbesondere Hinweisschilder, Verkehrszeichen und Nummernschilder für Kraftfahrzeuge mit den Kunststoffmischungen der vorliegenden Erfindung beschichtet werden, wobei hierfür auch Folien eingesetzt werden, die auf diese Gegenstände aufgebracht werden. Darüber hinaus stellen beschichtete transparente Kunststoffplatten, die als Bestandteil von Gebäuden, beispielsweise Gewächshäusern, eingesetzt werden können, einen interessanten Anwendungsbereich der vorliegenden Erfindung dar.

Abmischungen der schlagzähen Formmasse, insbesondere mit Polymethylmethacrylat, eignen sich zur Herstellung von Formkörpern mit einer Wanddicke über 1 mm; z. B. von extrudierten Bahnen von 1 bis 10 mm Dicke, die sich gut stanzen lassen und beispielsweise zur Herstellung bedruckbarer Blenden für Elektrogeräte brauchbar sind, oder zur Herstellung von gespritzten Formkörpern hoher Qualität z. B. Kraftfahrzeugscheiben.

Nachfolgend soll die vorliegende Erfindung anhand von Beispielen und Vergleichsbeispielen näher erläutert werden.

Vergleichsbeispiel 1

Es wurde eine Kunststoffmischung umfassend 73 Gew.-% schlagzähmodifiziertes Polymethylmethacrylat (kommerziell erhältlich von Evonik Röhm GmbH unter der Handelsbezeichnung Plex® ZK 5HC) und 27 Gew.-% thermoplastisches Polyurethan (kommerziell erhältlich von Bayer AG unter der Handelsbezeichnung Desmopan®) hergestellt. Das schlagzähmodifizierte Polymethylmethacrylat entspricht nicht Anspruch 1, wobei derartige Mischungen aus EP-A-0 272 975 bekannt sind.

Aus dieser Mischung wurde eine Folie durch einen Chill-Roll-Prozess hergestellt.

Die hierzu eingesetzte Extrusionsanlage bestand aus einem Einschneckenextruder, einer Schmelzepumpe, einer Breitschlitzextrusionsdüse mit einer Austrittsöffnung von 240 mm x 0,8 mm, einen Walzwerk (L-Konfiguration), eine Kaschierwerk und eine Wickelvorrichtung. Im Abstand von ca. 25 mm zur Austrittsöffnung der Breitschlitzextrusionsdüse war eine Chill-Roll-Walze mittig positioniert. Die Walze hatte einen Durchmesser von 100 mm und eine Breite von 300 mm. Die Walzenoberfläche wies eine Rauhigkeit Ra <= 0,003µm, und Rmax <0,25µm gemessen nach DIN 4768, auf. Die Temperatur der Chill-Roll Walze wurde zwischen 100°C und 130°C eingestellt, bevorzugt 110°C bis 120°C. Die Temperatur des Schmelzestroms betrug ca. 240°C. Der Schmelzefilm legte sich annähernd tangential an die Walzenoberfläche an und umschlang die Walze um ca. 90°. Nach Umschlingung der weiteren Nachkühlwalzen wurde die Dicke der Folienbahn durch ein traversierend angeordnetes, berührungsloses Meßsystem ermittelt und mittels elektronisch verarbeiteter Informationen die Schmelzeverteilung der Düse mittels eines Dehnbolzensystems über die Breite geregelt. Die Folie wurde anschließend kaschiert und aufgewickelt. Die Dicke der erhaltenen Folie betrug ca. 150 µm.

Zur Bestimmung der mechanischen Eigenschaften wurde die Weiterreißkraft gemessen. In Extrusionsrichtung wurde ein Wert von 0,74 N und quer zur Extrusionsrichtung ein Wert von 1 N gemessen. Darüber hinaus wurde die nominale Bruchdehnung bei Raumtemperatur, bei -10°C und -30°C bestimmt, wobei die erhaltenen Werte in Tabelle 1 dargelegt sind. Weiterhin wurden Weißbruchversuche bei Raumtemperatur, bei -10°C und -30°C durchgeführt, wobei jeweils Weißbruch zu beobachten war.

Beispiel 1

Das Vergleichsbeispiel 1 wurde im Wesentlichen wiederholt, wobei jedoch ein schlagzähmodifiziertes Polymethylmethacrylat gemäß Anspruch 1 eingesetzt wurde, welches unter der Handelsbezeichnung Plex® 8943-F von Evonik Röhm GmbH erhältlich ist. Die aus dieser Mischung durch einen Chill-Roll-Prozess hergestellte Folie wies in Extrusionsrichtung eine Weiterreißkraft von 1,4 N und quer zur Extrusionsrichtung von 1,7 N auf. Darüber hinaus wurde die nominale Bruchdehnung bei Raumtemperatur, bei -10°C und -30°C bestimmt, wobei die erhaltenen Werte in Tabelle 1 dargelegt sind. Weiterhin wurden Weißbruchversuche bei Raumtemperatur, bei -10°C und -30°C durchgeführt, ohne dass Weißbruch auftrat.

Vergleichsbeispiel 2

Das Vergleichsbeispiel 1 wurde im Wesentlichen wiederholt, wobei die Folie jedoch durch einen Glättprozess hergestellt wurde. Die hergestellte Folie wies in Extrusionsrichtung eine Weiterreißkraft von 0,65 N auf. Darüber hinaus wurde die nominale Bruchdehnung bei Raumtemperatur, bei -10°C und -30°C bestimmt, wobei die erhaltenen Werte in Tabelle 1 dargelegt sind. Weiterhin wurden Weißbruchversuche bei Raumtemperatur, bei -10°C und -30°C durchgeführt, wobei jeweils Weißbruch zu beobachten war.

Beispiel 2

Das Beispiel 1 wurde im Wesentlichen wiederholt, wobei die Folie jedoch durch einen Glättprozess hergestellt wurde. Die hergestellte Folie wies in Extrusionsrichtung eine Weiterreißkraft von 1,5 N auf. Darüber hinaus wurde die nominale Bruchdehnung bei Raumtemperatur, bei -10°C und -30°C bestimmt, wobei die erhaltenen Werte in Tabelle 1 dargelegt sind. Weiterhin wurden Weißbruchversuche bei Raumtemperatur, bei -10°C und -30°C durchgeführt, ohne dass Weißbruch auftrat.

Tabelle 1: Ergebnisse der Bruchdehnungsversuche (quer zur Extrusionsrichtung)

| | Raumtemperatur | -10°C | -30°C |
|---|---|---|---|
| Vergleichsbeispiel 1 | 155,7 | 67,8 | 24,9 |
| Beispiel 1 | 263,2 | 250,7 | 166,9 |
| Vergleichsbeispiel 2 | 139,4 | 48,5 | 27,3 |
| Beispiel 2 | 222,3 | 228,1 | 130,1 |

Tabelle 1: Ergebnisse der Bruchdehnungsversuche (in Extrusionsrichtung)

| | Raumtemperatur | -10°C | -30°C |
|---|---|---|---|
| Vergleichsbeispiel 1 | 151,7 | 20,4 | 15,2 |
| Beispiel 1 | 190,2 | 209,6 | 133,8 |
| Vergleichsbeispiel 2 | 77,4 | 35 | 14,4 |
| Beispiel 2 | 110,9 | 104,1 | 52,5 |

**Patentansprüche**

1. Kunststoffmischung umfassend mindestens ein thermoplastisches Polyurethan A) und mindestens ein schlagzähmodifiziertes Poly(meth)acrylat B), **dadurch gekennzeichnet, dass** das schlagzähmodifizierte Poly(meth)acrylat B) eine Hartphase mit einer Glasübergangstemperatur von mindestens 70°C, gemessen mittels DSC, und eine

Zähphase mit einer Glasübergangstemperatur, gemessen mittels DSC, von höchstens -10°C umfasst, die Zähphase eine mittlere Teilchengröße von höchstens 130 nm aufweist und mindestens ein Teil der Zähphase mit der Hartphase kovalent verknüpft ist.

**2.** Kunststoffmischung gemäß Anspruch 1, **dadurch gekennzeichnet, dass** die Hartphase des schlagzähmodifizierten Poly(meth)acrylats B) mindestens 80 Gew.-% an Wiederholungseinheiten, die von Methylmethacrylat abgeleitet sind, bezogen auf das Gewicht der Hartphase des schlagzähmodifizierten Poly(meth)acrylats B), umfasst.

**3.** Kunststoffmischung gemäß Anspruch 1 oder 2, **dadurch gekennzeichnet, dass** die Zähphase des schlagzähmodifizierten Poly(meth)acrylats B) mindestens 50 Gew.-% an Wiederholungseinheiten aufweist, die von einem Alkylacrylat mit 1 bis 6 Kohlenstoffatomen abgeleitet sind, bezogen auf das Gewicht der Zähphase des schlagzähmodifizierten Poly(meth)acrylats B).

**4.** Kunststoffmischung gemäß mindestens einem der vorhergehenden Ansprüche, **dadurch gekennzeichnet, dass** mindestens 15 Gew.-% der Hartphase kovalent mit der Zähphase verknüpft ist.

**5.** Kunststoffmischung gemäß mindestens einem der vorhergehenden Ansprüche, **dadurch gekennzeichnet, dass** das Gewichtsverhältnis von an die Zähphase kovalent gebundene Hartphase zu Zähphase des schlagzähmodifizierten Poly(meth)acrylats B) mindestens 1:10 beträgt.

**6.** Kunststoffmischung gemäß mindestens einem der vorhergehenden Ansprüche, **dadurch gekennzeichnet, dass** die Zähphase eine mittlere Teilchengröße von höchstens 70 nm aufweist.

**7.** Kunststoffmischung gemäß mindestens einem der vorhergehenden Ansprüche, **dadurch gekennzeichnet, dass** das schlagzähmodifizierte Poly(meth)acrylat B) höchstens 0,05 Gew.-% an wasserlöslichen Bestandteilen aufweist.

**8.** Kunststoffmischung gemäß mindestens einem der vorhergehenden Ansprüche, **dadurch gekennzeichnet, dass** das Polyurethan A) höchstens 10 Gew.-% an Wiederholungseinheiten umfasst, die aromatische Gruppen aufweisen.

**9.** Kunststoffmischung gemäß mindestens einem der vorhergehenden Ansprüche, **dadurch gekennzeichnet, dass** das Gewichtsverhältnis von Polyurethan A) zu schlagzähmodifiziertem Poly(meth)acrylat B) im Bereich von 10:1 bis 1:10 liegt.

**10.** Kunststoffmischung gemäß mindestens einem der vorhergehenden Ansprüche, **dadurch gekennzeichnet, dass** die Kunststoffmischung ein Poly(meth)acrylat C) umfasst, welches sich vom schlagzähmodifizierten Poly(meth)acrylat B) unterscheidet.

**11.** Kunststoffmischung gemäß Anspruch 10, **dadurch gekennzeichnet, dass** das Gewichtsverhältnis von schlagzähmodifizierten Poly(meth)acrylat B) zu Poly(meth)acrylat C) im Bereich von 10:1 bis 1:10 liegt.

**12.** Kunststoffmischung gemäß Anspruch 10 oder 11, **dadurch gekennzeichnet, dass** das Gewichtsverhältnis von Polyurethan A) zu Poly(meth)acrylat C) im Bereich von 10:1 bis 1:10 liegt.

**13.** Kunststoffmischung gemäß mindestens einem der vorhergehenden Ansprüche, **dadurch gekennzeichnet, dass** die Kunststoffmischung mindestens einen UV-Absorber aufweist.

**14.** Kunststoffmischung gemäß mindestens einem der vorhergehenden Ansprüche, **dadurch gekennzeichnet, dass** die Kunststoffmischung mindestens ein Mattierungsmittel umfasst.

**15.** Kunststoffmischung gemäß Anspruch 14, **dadurch gekennzeichnet, dass** das Mattierungsmittel Kunststoffpartikel umfasst.

**16.** Kunststoffmischung gemäß mindestens einem der vorhergehenden Ansprüche, **dadurch gekennzeichnet, dass** die Kunststoffmischung 10 bis 60 Gew.-% Polyurethan A) und 10 bis 60 Gew.-% schlagzähmodifiziertes Poly(meth)acrylat B) aufweist.

**17.** Kunststoffmischung gemäß Anspruch 16, **dadurch gekennzeichnet, dass** die Kunststoffmischung aus 10 bis 40 Gew.-% Polyurethan A), 10 bis 40 Gew.-% schlagzähmodifiziertes Poly(meth)acrylat B), 40 bis 80 Gew.-% Poly(meth)acrylat C) und 0 bis 30 Gew.-% Additive besteht.

**18.** Kunststoffmischung gemäß mindestens einem der vorhergehenden Ansprüche, **dadurch gekennzeichnet, dass** die Kunststoffmischung eine Transmission von mindestens 60% aufweist, gemessen bei D65 und 10° an einem Probeköper mit einer Schichtdicke von 3 mm.

**19.** Verfahren zur Herstellung einer Kunststoffmischung gemäß mindestens einem der Ansprüche 1 bis 18, **dadurch gekennzeichnet, dass** man mindestens ein thermoplastisches Polyurethan A) und mindestens ein schlagzähmodifiziertes Poly(meth)acrylat B) compoundiert.

**20.** Formkörper umfassend eine Kunststoffmischung gemäß mindestens einem der Ansprüche 1 bis 18.

**21.** Formkörper gemäß Anspruch 20, **dadurch gekennzeichnet, dass** der Formkörper eine Folie ist.

**22.** Formkörper gemäß Anspruch 20 oder 21, **dadurch gekennzeichnet, dass** der Formkörper eine Beschichtung aufweist, die eine Kunststoffmischung gemäß mindestens einem der Ansprüche 1 bis 18 umfasst.

## Claims

**1.** Plastics mixture comprising at least one thermoplastic polyurethane A) and at least one impact-modified poly(meth) acrylate B), **characterized in that** the impact-modified poly(meth)acrylate B) comprises a hard phase whose glass transition temperature is at least 70°C, measured using DSC, and a tough phase whose glass transition temperature, measured using DSC, is at most -10°C, the average particle size of the tough phase is at most 130 nm, and at least a portion of the tough phase has covalent linkage to the hard phase.

**2.** Plastics mixture according to Claim 1, **characterized in that** the hard phase of the impact-modified poly(meth) acrylate B) comprises at least 80% by weight of repeat units derived from methyl methacrylate, based on the weight of the hard phase of the impact-modified poly(meth)acrylate B).

**3.** Plastics mixture according to Claim 1 or 2, **characterized in that** the tough phase of the impact-modified poly(meth) acrylate B) has at least 50% by weight of repeat units derived from an alkyl acrylate having from 1 to 6 carbon atoms, based on the weight of the tough phase of the impact-modified poly(meth)acrylate B).

**4.** Plastics mixture according to at least one of the preceding claims, **characterized in that** at least 15% by weight of the hard phase has covalent linkage to the tough phase.

**5.** Plastics mixture according to at least one of the preceding claims, **characterized in that** the ratio by weight of hard phase bonded covalently to the tough phase to tough phase of the impact-modified poly(meth)acrylate B) is at least 1:10.

**6.** Plastics mixture according to at least one of the preceding claims, **characterized in that** the average particle size of the tough phase is at most 70 nm.

**7.** Plastics mixture according to at least one of the preceding claims, **characterized in that** the impact-modified poly (meth)acrylate B) has at most 0.05% by weight of water-soluble constituents.

**8.** Plastics mixture according to at least one of the preceding claims, **characterized in that** the polyurethane A) comprises at most 10% by weight of repeat units which have aromatic groups.

**9.** Plastics mixture according to at least one of the preceding claims, **characterized in that** the ratio by weight of polyurethane A) to impact-modified poly(meth)acrylate B) is in the range from 10:1 to 1:10.

**10.** Plastics mixture according to at least one of the preceding claims, **characterized in that** the plastics mixture comprises a poly(meth)acrylate C) which differs from the impact-modified poly(meth)acrylate B).

**11.** Plastics mixture according to Claim 10, **characterized in that** the ratio by weight of impact-modified poly(meth) acrylate B) to poly (meth) acrylate C) is in the range from 10:1 to 1:10.

12. Plastics mixture according to Claim 10 or 11, **characterized in that** the ratio by weight of polyurethane A) to poly (meth)acrylate C) is in the range from 10:1 to 1:10.

13. Plastics mixture according to at least one of the preceding claims, **characterized in that** the plastics mixture has at least one UV absorber.

14. Plastics mixture according to at least one of the preceding claims, **characterized in that** the plastics mixture comprises at least one matting agent.

15. Plastics mixture according to Claim 14, **characterized in that** the matting agent comprises plastics particles.

16. Plastics mixture according to at least one of the preceding claims, **characterized in that** the plastics mixture has from 10 to 60% by weight of polyurethane A) and from 10 to 60% by weight of impact-modified poly(meth)acrylate B).

17. Plastics mixture according to Claim 16, **characterized in that** the plastics mixture is composed of from 10 to 40% by weight of polyurethane A), from 10 to 40% by weight of impact-modified poly(meth)acrylate B), from 40 to 80% by weight of poly(meth)acrylate C) and from 0 to 30% by weight of additives.

18. Plastics mixture according to at least one of the preceding claims, **characterized in that** the transmittance of the plastics mixture is at least 60%, measured using D65 and 10°, on a test specimen whose thickness is 3 mm.

19. Process for the production of a plastics mixture according to at least one of Claims 1 to 18, **characterized in that** at least one thermoplastic polyurethane A) and at least one impact-modified poly(meth)acrylate B) are compounded.

20. Moulding comprising a plastics mixture according to at least one of Claims 1 to 18.

21. Moulding according to Claim 20, **characterized in that** the moulding is a foil.

22. Moulding according to Claim 20 or 21, **characterized in that** the moulding has a coating which comprises a plastics mixture according to at least one of Claims 1 to 18.

**Revendications**

1. Mélange de plastiques comprenant au moins un polyuréthane thermoplastique A) et au moins un poly(méth)acrylate à résistance aux impacts modifiée B), **caractérisé en ce que** le poly(méth)acrylate à résistance aux impacts modifiée B) comprend une phase dure ayant une température de transition vitreuse d'au moins 70 °C, mesurée par DSC, et une phase ductile ayant une température de transition vitreuse, mesurée par DSC, d'au plus -10 °C, la phase ductile présentant une taille de particule moyenne d'au plus 130 nm et au moins une partie de la phase ductile étant reliée de manière covalente avec la phase dure.

2. Mélange de plastiques selon la revendication 1, **caractérisé en ce que** la phase dure du poly(méth)acrylate à résistance aux impacts modifiée B) comprend au moins 80 % en poids d'unités de répétition dérivant de méthacrylate de méthyle, par rapport au poids de la phase dure du poly(méth)acrylate à résistance aux impacts modifiée B).

3. Mélange de plastiques selon la revendication 1 ou 2, **caractérisé en ce que** la phase ductile du poly(méth)acrylate à résistance aux impacts modifiée B) comprend au moins 50 % en poids d'unités de répétition dérivant d'un acrylate d'alkyle contenant 1 à 6 atomes de carbone, par rapport au poids de la phase ductile du poly(méth)acrylate à résistance aux impacts modifiée B).

4. Mélange de plastiques selon au moins l'une quelconque des revendications précédentes, **caractérisé en ce qu'**au moins 15 % en poids de la phase dure est reliée de manière covalente avec la phase ductile.

5. Mélange de plastiques selon au moins l'une quelconque des revendications précédentes, **caractérisé en ce que** le rapport en poids entre la phase dure reliée de manière covalente à la phase ductile et la phase ductile du poly (méth)acrylate à résistance aux impacts modifiée B) est d'au moins 1:10.

6. Mélange de plastiques selon au moins l'une quelconque des revendications précédentes, **caractérisé en ce que**

la phase ductile présente une taille de particule moyenne d'au plus 70 nm.

7. Mélange de plastiques selon au moins l'une quelconque des revendications précédentes, **caractérisé en ce que** le poly(méth)acrylate à résistance aux impacts modifiée B) comprend au plus 0,05 % en poids de constituants solubles dans l'eau.

8. Mélange de plastiques selon au moins l'une quelconque des revendications précédentes, **caractérisé en ce que** le polyuréthane A) comprend au plus 10 % en poids d'unités de répétition comprenant des groupes aromatiques.

9. Mélange de plastiques selon au moins l'une quelconque des revendications précédentes, **caractérisé en ce que** le rapport en poids entre le polyuréthane A) et le poly(méth)acrylate à résistance aux impacts modifiée B) se situe dans la plage allant de 10:1 à 1:10.

10. Mélange de plastiques selon au moins l'une quelconque des revendications précédentes, **caractérisé en ce que** le mélange de plastiques comprend un poly(méth)acrylate C) qui diffère du poly(méth)acrylate à résistance aux impacts modifiée B).

11. Mélange de plastiques selon la revendication 10, **caractérisé en ce que** le rapport en poids entre le poly(méth) acrylate à résistance aux impacts modifiée B) et le poly(méth)acrylate C) se situe dans la plage allant de 10:1 à 1:10.

12. Mélange de plastiques selon la revendication 10 ou 11, **caractérisé en ce que** le rapport en poids entre le polyuréthane A) et le poly(méth)acrylate C) se situe dans la plage allant de 10:1 à 1:10.

13. Mélange de plastiques selon au moins l'une quelconque des revendications précédentes, **caractérisé en ce que** le mélange de plastiques comprend au moins un absorbeur UV.

14. Mélange de plastiques selon au moins l'une quelconque des revendications précédentes, **caractérisé en ce que** le mélange de plastiques comprend au moins un agent matant.

15. Mélange de plastiques selon la revendication 14, **caractérisé en ce que** l'agent matant comprend des particules de plastique.

16. Mélange de plastiques selon au moins l'une quelconque des revendications précédentes, **caractérisé en ce que** le mélange de plastiques comprend 10 à 60 % en poids de polyuréthane A) et 10 à 60 % en poids de poly(méth) acrylate à résistance aux impacts modifiée B).

17. Mélange de plastiques selon la revendication 16, **caractérisé en ce que** le mélange de plastiques est constitué de 10 à 40 % en poids de polyuréthane A), 10 à 40 % en poids de poly(méth)acrylate à résistance aux impacts modifiée B), 40 à 80 % en poids de poly(méth)acrylate C) et 0 à 30 % en poids d'additifs.

18. Mélange de plastiques selon au moins l'une quelconque des revendications précédentes, **caractérisé en ce que** le mélange de plastiques présente une transmission d'au moins 60 %, mesurée à D65 et 10° sur un échantillon d'une épaisseur de couche de 3 mm.

19. Procédé de fabrication d'un mélange de plastiques selon au moins l'une quelconque des revendications 1 à 18, **caractérisé en ce qu'**au moins un polyuréthane thermoplastique A) et au moins un poly(méth)acrylate à résistance aux impacts modifiée B) sont mélangés.

20. Corps moulé comprenant un mélange de plastiques selon au moins l'une quelconque des revendications 1 à 18.

21. Corps moulé selon la revendication 20, **caractérisé en ce que** le corps moulé est une feuille.

22. Corps moulé selon la revendication 20 ou 21, **caractérisé en ce que** le corps moulé comprend un revêtement qui comprend un mélange de plastiques selon au moins l'une quelconque des revendications 1 à 18.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0113924 A
- EP 0522351 A
- EP 0465049 A
- EP 0683028 A
- DE 3842796 A
- US 3700752 A
- US 5539053 A
- EP 0272975 A
- WO 2007057242 A
- DE 2750682 A
- US 4110843 A


### In der Beschreibung aufgeführte Nicht-Patentliteratur


- *Kunststoffe,* vol. 85, 1616
- Encycl. Polym. Sci. Eng. vol. 13, 243-303
- **NACH FOX T. G.** *Bull. Am. Physics Soc. 1,* vol. 3, 123
- Polymer Handbook. J. Wiley & Sons, 1975
- Ullmann's Encyclopedia of Industrial Chemistry